# EUROPEAN PATENT SPECIFICATION

(11) **EP 3 025 459 B1**
(45) Date of publication and mention of the grant of the patent: **26.05.2021**
(21) Application number: 14747559.4
(22) Date of filing: 25.07.2014
(51) Int. Cl.: H04L 12/26, H04L 12/24, H04L 12/725, H04L 12/721

(54) **PROBE ROUTING IN A NETWORK**
ROUTEN EINER SONDE IN EINEM NETZWERK
ROUTAGE DE SONDE DANS UN RÉSEAU

(30) Priority: 26.07.2013 EP 13178164
(43) Date of publication of application: 01.06.2016
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: STOKKING, Hans Maarten, NL-2292 CH Wateringen (NL); DEN HARTOG, Frank T. H., Melba, ACT 2615 (AU); HERRERA VAN DER NOOD, Manuel, NL-3225 GL Hellevoetsluis (NL)
(74) Representative: Wuyts, Koenraad Maria
(86) International application number: PCT/EP2014/066068
(87) International publication number: WO 2015/011273

(56) References cited:
- US-A1- 2009 198 832
- US-A1- 2012 287 791

## Description

The invention concerns a method of probing a network between a probe node and a destination node, a corresponding network and a corresponding redirecting node as claimed in the independent claims.

### Background to the Invention

Probing a network is typically performed to identify or quantify facts about the network, for example available bandwidth and capacity in parts of the network, network topology and other network characteristics such as whether ports are open or closed or whether certain functions are enabled at nodes within the network.

Network probing can be performed both actively and passively. In active probing an element connected to the network actively sends out probe packets on the network, and another element in the network receives these probes. Sometimes probes are sent round-trip within the network. Here the probing network element sends probes to other network elements and receives replies which are typically automated. In passive probing no probe packets are actively sent and instead the probing node monitors, in other words passively listens in on, existing network traffic to derive information. Hybrids methods are also possibly in which both active and passive methods are combined. Typically hybrid probing methods use existing traffic but influence that traffic in some way.

Further methods of probing include receiver-only based probing methods, a form of passive probing in which the sending of traffic is not controlled, sender-only based probing and 'sender + receiver' based probing methods. The latter two forms of probing can either be active or passive. Further there are en-route probes, which involve a monitoring module on a network element, there are probing methods that use end-to-end probes and there are probing methods that can remotely probe links that are inside the network, also known as per-hop probing.

Information revealed by probing is typically limited by the method used. For example methods of bandwidth probing might typically only reveal the bandwidth of the bottleneck link and even then only on the existing paths available in the network. Current probing methods can only probe nodes and connections which are on networks paths between a probing node and some other reachable node because not all nodes are situated on an existing probe pathway as defined by the traffic flow in the network. In any case not all nodes are available as a starting point from which to launch an active probe. For example in a home or domestic network an operator can install probing software on the home gateway and perhaps a proprietary TV set top box, but an operator cannot necessarily install probing software on the user's own PC or game box, XBOX or other similar device. Therefore even though the operator may be supplying a gateway device through which the network communicates

with the wider internet, the operator may not be able to derive accurate information about devices on the network which pose difficulties or otherwise affect the network.

Solutions exist for detecting the capacity or bandwidth on a specific link and are typically of two forms. One form makes use of the Time To Live (TTL) field of IP packets which is typically used to monitor the number of times a packet is forwarded before reaching a certain destination. Each time the packet is forwarded by a router a value of 1 is typically subtracted from the current TTL value by the router. When the TTL value reduces to zero the packet can no longer be forwarded and this ensures that packets will not be forever forwarded, thereby nullifying any cyclic routes which may have arisen in a network. In practice, the router that reduces the TTL value to zero also sends an ICMP reply TTL exceeded' and by carefully choosing the probe TTL value this reply can be incorporated into a probing mechanism. Another form of bandwidth probing makes use of cross-correlations of the probes of different paths to find out where certain paths coincide. However this method cannot be used to measure all links, typically due to probing limitations as mentioned earlier.

These known solutions are not applicable to all networks and in particular they are less applicable to a network typically found in a home or domestic situation. The TTL-based approach is not applicable because a typical home network has many layer 2, e.g. Ethernet, hops, but no layer 3, e.g. IP, hops. Thus, since a switch will not subtract 1 from the TTL value and will not sent ICMP TTL exceeded' messages, the TTL approach is typically meaningless in a home network. Also, the cross-correlation method is not useful because the home network is typically a tree topology whereas the cross-correlation probing method requires different routes to go through the link being investigated.

'Efficiently Monitoring Bandwidth and Latency in IP Networks', Yuri Breitbart et al, INFOCOM 2001, Twentieth Annual Joint Conference of the IEEE Computer and Communications Societies, Vol. 2, 2001, pp. 933-942, describes a method of probing a network using source routing and IP encapsulation in which probe packets are encoded with a pre-defined route, typically stipulating a sequence of nodes as the route in a network, and sent out into the network which is to be probed. Both source routing and IP encapsulation require packet processing at the nodes which must be preprogrammed with the relevant functionality for either source routing or IP encapsulation. The packet processing which occurs at any node introduces an unknown time delay and therefore the results of the probing method are inaccurate. Additionally, the probe method using IP encapsulation suffers a further inaccuracy because as the IP data packets are unrolled at each node to strip out the top IP header for transfer into the header of the new outgoing packet, the size of the overall IP packet reduces and this produces an inaccuracy because while network probing results are based on packet size, this method results in a variable packet size over the entire route.

US 2012/287791 A1 discloses how load balancing is performed in a network using flow-based routing. For example, upon detection of a big flow, one or more alternative paths from a source host to a destination host in the network may be discovered by probing the network and generating, for each of the one or more alternative paths, an association of the packet header information of the big flow to an alternative path discovered using results of probing the network. Upon congestion in a path currently being used by the big flow, an alternative path that is not congested is selected from the one or more discovered alternative paths. The packet header information of the big flow is altered using the generated association of the packet header information to the selected alternative path such that the big flow will be transmitted using the selected alternative path.

US 2009/198832 A1 describes that a network device (e.g., a master controller) may detect an event on a current path in a computer network from a local network domain to a destination address prefix of a remote domain. In response, the device may dynamically (e.g., intelligently) determine a trace target destination address within the destination address prefix, and may perform (or request performance of) a Traceroute of the current path and a selection of alternate paths in the network from the local network domain to the trace target, where the Traceroute is adapted to obtain per-hop measurements along the respective traced path. The measurements may then be stored, for example, to be used for optimal path selection, fault identification reporting, etc..

It is a problem to accurately probe a network.

### Summary of the invention

The invention is as described in the claims.

A method of probing a network is described, in which the network is probed between a probe node and a destination node and in which the network comprises a further node and further comprises a connection between the probe node and the destination node, a connection between the probe node and the further node and a connection between the further node and the destination node.

By node is meant a network element able to send and receive packets and possibly forward packets. Typical examples of nodes are a home gateway, a router, a computer, a tablet, a set top box, a wireless camera etc. By connection is meant a link or collection of links or some form of coupling, for example electronically, according to known methods, or wirelessly, according to known methods, that connects nodes into a network and enables packets to travel over the connection or connections between the nodes. The probe node is a node arranged to perform probing, in other words send out an original probe packet. Typically the probe node contains, comprises or has access to dedicated software or programming which allows it to perform and manage probing in a network. The method includes selecting at least one node to be a redirecting node and changing the routing rules at the redirecting node, selecting at least one node to be a forwarding node and ensuring packet forwarding at the forwarding node, and transmitting a probe packet between the probe node to the destination node.

This ensures that the probe packet can be sent around a route in a network while minimising delays caused by processing at the nodes because it allows a probe packet to probe a network over a route which is managed at the nodes. The route is managed by changing routing rules at a node so that it redirects probe packets which are intended to be delivered from an origin to a destination so that they first travel via an alternative route in the network and not via the route which the network would normally support or use. In this way the method allows the probing of routes and/or links in a network which could not hitherto be probed. The node which performs the rerouting is referred to as a redirecting node. This action of changing the routing rules at the redirecting node ensures that a node, the redirecting node, takes the decision regarding which route to send the probe packet over. In other words the decision as to the route taken is devolved to a node in the network.

The invention allows a probe packet to be sent from a probe node to a destination node, or vice versa, via an alternative node, or further node. The alternative node receives the packet from the probe node and forwards it to a destination node. Alternatively it receives a packet from the destination node and forwards it to the probe node. In particular the alternative, or further, node does not have to lie on a direct route between the probe node and the destination node. In other words the probe packet is not constrained to travel between the probe node to the destination node via a direct link or connection between the probe and destination node, but rather can travel via a longer, circuitous route, in the network. This allows the possibility of probing routes, connections or links which might not otherwise be capable of being probed. Typically in a network traffic rules and communication protocols are set up to ensure packets are transported between nodes by the most efficient route. When probing existing networks under existing probing methods the traffic rules and communication protocols force probe packets to use the existing routes between nodes and this can limit the information which a probing method can derive. Changing the routing rules at a node and ensuring packet forwarding at another node allows the network to be probed by different routes and this can result in the probing of links in routes that were hitherto not available to be probed in that network.

The method has the further advantage that network links which are not on a direct path between the probe node and a destination node can be probed.

In a further advantage the method can be used in a small network, for example a home or domestic network, which is unlikely to include Source routing or IP encapsulation functionality in the nodes.

In such a small or domestic network the probe node will typically be a home gateway or residential gateway.

Two options are covered by each of the independent claims:

According to the first option, the probe node is selected to be the redirecting node and the further node is selected to be the forwarding node.

This first option allows a probe packet to be sent from an outgoing node, the probe node, to a destination node via another, further, node in the network. The further node is the forwarding node. In this embodiment an outgoing probe packet, in other words a probe packet which starts at the probe node, is sent out into the network and via a non-direct route to the destination node.

In this first option the destination node may send the probe packet back to the probe node either directly or also indirectly via the further node.

According to the second option, the destination node is selecting to be the redirecting node and the further node is selected to be the forwarding node.

This second option allows a probe packet to be sent directly to the destination node via the shortest possible route. This is how a probe packet would normally be transmitted to a destination probe. However in this embodiment the destination probe transmits the probe packet back to the probe node via the further node and in this return journey through the network the probe packets travels on a non-direct route between the destination node and the probe node.

Typically when using the method of the invention the routing rules are changed at the redirecting node so that a probe packet is routed to the forwarding node. This allows a probe packet to be routed to the forwarding node before it is routed on, or transmitted on, to any other node, for example the node to which it is ultimately to be delivered.

Preferred embodiments are covered by the dependent claims.

Ensuring packet forwarding in an IP network can be achieved by probing the network first in a conventional manner to ascertain if IP forwarding is turned on at a node which is selected to be a forwarding node. If forwarding is not already enabled it can be enabled by changing the settings on the node selected to be a forwarding node. These can be changed manually by the user, a tool can be provided which when run by the user changes the settings automatically or these settings can be changed using remote management, for example by using the DHCP ip-forwarding option which is understood in the art as being code 19 from RFC 2132, and which can be set to 1, which as the skilled person will understand sets IP forwarding to 'enabled'. As is known by the skilled person, DHCP is a specific client server management protocol which can be used in a home gateway, the home gateway playing the role of DHCP server. The other nodes in the network can then be managed as DHCP clients by the home gateway. A particular advantage of using DHCP is that the home gateway can turn the IP forwarding in a client node on and off. This allows setting up of alternative routes specifically for probing the network, and removing them or cancelling them afterwards by restoring the original IP forwarding setting at nodes.

### Brief description of the drawings

Figure 1 shows a problem in network probing which is solved by the invention.
Figure 2 shows an embodiment of the invention.
Figure 3 shows further embodiments of the invention.

### Detailed description

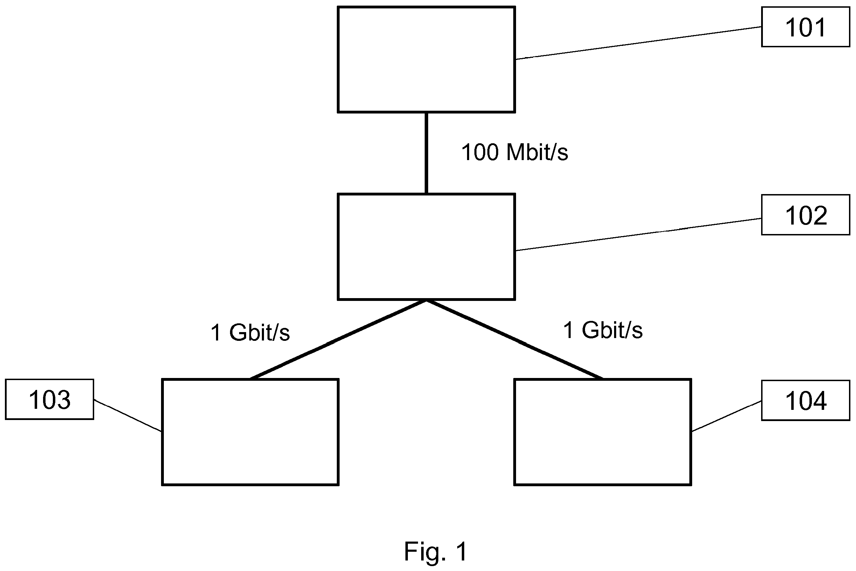

Figure 1 shows a problem in network probing which is solved by the invention. The problem is that of how to probe a specific network route or a part of a specific route, sometimes known as a 'hop', when the entity performing the probing does not have access to any of the devices on that route. In this sense the lack of access means not being able to install probing and/or monitoring software on all the devices or on specific relevant devices on that route. The lack of access means the entity has no way of probing the specific route, let alone a hop on the route.

A very simple, and typical, network configuration is shown in which a home gateway 101 is connected to a switch 102 which is itself connected to two devices 103 and 104. Device A, 103, and device B, 104, are both end devices in this particular network. The switch 102 could also be any other network node for example a router, a wireless router, etc. The home gateway 101 is a boundary device on the edge of the network offering a link to the wider, outside internet, for example, and as such an operator can typically install software on the home gateway but not on the switch or the devices in the home. Therefore the routes in the network which are available from probing from the home gateway 101 are the route between the home gateway 101 and device A 103, and the route between the home gateway 101 and device B 104. However, the route between device A 103 and device B 104 cannot be probed from the home gateway.

While it might theoretically be possible to install probe software on, for example, device A 103 which can then probe the route between device A 103 and device B 104, in practice this requires specialist knowledge which the home owner or other owner or user of a home or domestic network might not have.

However, the home gateway 101 has a 100 Mbit/s port to the switch 102, but the switch is actually a 1 Gbit/s switch meaning that the hop between the switch 102 and either device A 103 or device B 104 can carry data at a rate of 1 Gbit/s. But since probing methods are typically limited by the bottleneck link in a probed pathway, in other words the link with the least bandwidth or the largest delay, probing performed from the home gateway 101 can identify the bottleneck of 100 Mbit/s in the route from the home gateway 101 to device A and find the same bottleneck of 100 Mbit/s in the route from the home gateway 101 to device B. However, hence, probing performed from the home gateway 101 will not identify or find out that the switch 102 is capable of gigabit networking. This is important because data sent from device A 103 to device B 104, or vice versa, can actually be theoretically transmitted at the rate of 1 Gbit/s and knowledge of this can be used in the home gateway 101 to impact decisions taken on how much data the network can handle.

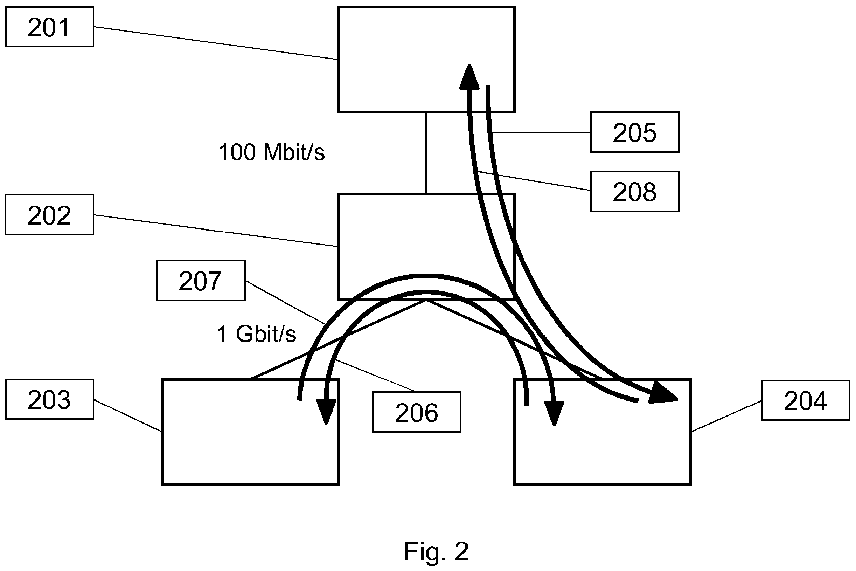

Figure 2 shows an embodiment of the invention which offers a solution to the problem. Residential, or home, gateway 201 is coupled to switch 202 via a connection with a 100Mbit/s capacity and switch 202, which has a capacity of 1 GBit/s passes traffic through to both device A 203 and device B 204. Device A 203 and device B 204 can also send traffic or data to each other through switch 202. Because device A 203 and device B 204 communicate via switch 202 they can pass data to each other at a rate of 1 GBit/s.

In performing a probe the home gateway 201 sends out 205 a probe packet onto the network with final destination device A 203. However it sends the probe packet to device B 204 first. The first decision in the route taken by the probe packet is taken at the switch 202 which receives the packets and then places it back out on the network on a route to device B 204. Device B 204 will receive the probe packet and route it 206 to device A 203. Device A 203 will reply to the probe packet, sending a reply packet with the home gateway 201 as the destination. However, device A 203 will send the reply first 207 to device B 204. Device B 204 will route the packet 208 to the home gateway 201.

In this example the method is used twice, firstly when the probe is sent out from the home gateway 201 with device A 203 as final destination, and then again when a reply probe is sent out from device A 203 with the home gateway 201 as final destination.

To accomplish this a number of measures can typically be taken. The specific measures may depend on the form of routing undertaken in the network but if the network is an IP network the following can be performed.

In order to transmit the probe packet to its destination but via an alternative node 205 the home gateway transmits a probe packet which has a destination IP address of device A 203 but a destination MAC address of device B 204. This can be done by making the IP address of device B the gateway for destination IP address of device A, thus changing the default route for packets going from the home gateway to device A. This has the advantage of not needing any low-layer socket access to the home gateway, but has the disadvantage of sending all traffic, both probe traffic and regular traffic, to device A via device B. In general the changing of the routing rules will cause the re-routing of all traffic towards certain destinations on the network transmitted out of the node chosen to be the redirecting node. Therefore in a particularly useful embodiment the routing rules are only changed for the duration of the probing and then subsequently changed back again.

In order to transmit the probe packet 206 further from device B to device A IP forwarding must be enabled at device B.

For example, in Windows XP PCs enabling IP forwarding can be achieved using a registry setting, for example the following setting may be appropriate:
(HKEY_LOCAL_MACHINE\SYSTEM\CurrentControlSet\Services\Tcpip\Parameters\IPEnableRouter= 1)

On Linux enabling IP forwarding can be achieved by setting the net.ipv4.ip_forward parameter, or on Windows by enabling Internet Connection Sharing. In most home networks these parameters are disabled by default. Besides enabling forwarding, the firewall settings also should allow any of the forwarded probes or their replies. Normally, a firewall will have different settings for ingress traffic, egress traffic and forwarding traffic. It is quite usual to have forwarding traffic allowed as a default setting.

In order to send back the probe packet reply 207 device A sends a packet with a destination IP address of the home gateway to the MAC address of device B. This is similar to step 205, however in the cases when it is not possible to install software with special socket access on device A it is possible as a viable alternative to set a routing rule on device A for destination IP address of the home gateway using device B as its gateway. In an advantageous embodiment this can be achieved by a node, for example the home gateway 201, operating as a DHCP server. As a DHCP server it can change the routing rules at device A 203 using RFC 3442.

In order to transmit the probe packet further 208 from device B to the home gateway no alterations to the way of working described for step 206 are necessary.

In the method the actual probe method used can advantageously be a per-hop probing method with a TTL-approach, and this is used to measure capacity on the links probed. In the example described per-hop probing will show that the 'hop' between device B and device A has substantially a 1 Gbit/s capacity. The method used therefore provides more information than existing probing methods.

The method described creates a new route for packets to be navigated through the network and has the advantage that it enables routing on one or more end-points, for example, in the case described above, a first end point device B 204 and a second end point device A 203. Therefore while the method may advantageously use a TTL-based approach to probe links it may in fact use most probing methods. For example these further probing techniques could use cross-correlation methods or use other probing methods to first probe a direct route towards a first device and then probe the indirect route to a second device via the first device, and deduce probing results for the connection between the first device and the second device from these two probes.Advantageously, the method allows for the possibility of different routes to be probed within a single network, even when probing software is not distributed throughout the network. In fact all kinds of routes between various devices in the home network can be probed using the method while maintaining probing software on only a single node, for example on the home gateway.

The method is particularly advantageous in home networks because most nodes or end points in a home network include the possibility for IP forwarding and typically the probing node merely needs to check or ensure that IP forwarding is in fact enabled for the method to be successfully used.

A further advantage of the method is that it is inherently secure for the endpoints, for example the forwarding node, as no ingress firewall rule is needed on the endpoint. Just forwarding traffic can never compromise the endpoint, at least while assuming no inherent vulnerability in the IP stack used for forwarding the packets. This is a deep advantage of the method because, unlike in probing methods using IP encapsulation, the packets do not need to be unpacked to derive the forwarding information. In the method described the information needed for forwarding is already provided to the nodes by either changing the routing rules and determining and/or ensuring IP forwarding is enabled.

Probing according to the method can be performed advantageously from the home gateway but can also be performed from any of the other endpoints within the network. However, because home networks typically allow only limited access from outside to devices inside the network the method is particularly useful for allowing probing of the home network from outside, via the home gateway or other such device which operates as an interface to the network from outside the network. A home network typically interfaces with the wider world of networks, for example the internet, via a home gateway which is typically at least partially under the control of an operator providing network, internet and other services, for example television, to the home network. Since the operator can control the home gateway, it can install probing software on the home gateway and thus probe the home network using the home gateway as probing node. This has the advantage of allowing the operator to gain important information about aspects of the network, for example the bandwidths, that will allow the operator to optimise the operator service provided to that network.

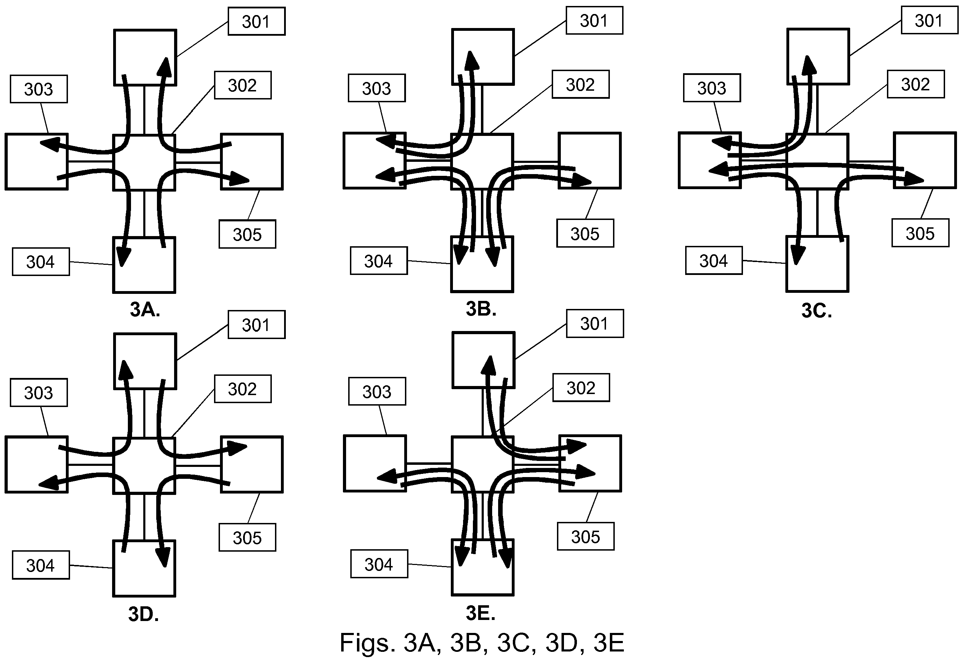

Alternative routes through typical networks may also be envisaged. For example Figure 3 shows further embodiments of the invention as worked in a network comprising a home gateway 301, a switch 302, device A 303, device B 304 and device C 305. These show the extent of the invention, but the invention is not limited to these specific examples.

In embodiment 3A a circular route is used in which a probe packet is sent from the home gateway 301 first via the switch to device A 303, then from device A via the switch to device B 304, then from device B through the switch to device C 305, and finally from device C through the switch back to the home gateway.

In embodiment 3B a similar path to the embodiment of 3A is chosen until the probe arrives at device C 305. The probe is then returned through the same route from device C via device B 304 and device A 303, finally back to the home gateway 301.

In embodiment 3C a similar path to the embodiment of 3A is chosen until the probe arrives at device C 305. The probe is then returned directly to device A 303 through the switch 302 and is then returned to the home gateway 301.

In embodiment 3D shows a path which is essentially opposite in direction to that of embodiment 3A. The probe is sent from the home gateway 301 firstly though the switch 302 to device C 305, then through the switch 302 to device B 304, again through the switch 302 to device A 303 and finally through the switch 302 to the home gateway 301.

In embodiment 3E a similar path to the embodiment of 3D is chosen until the probe arrives at device A 303. The probe is then returned through the same route from device A via device B 304 and device C 305, finally back to the home gateway 301.

Measuring different routes in various ways will give more information, for example it may give more information on capacity or bandwidth in a certain direction, or show bottlenecks without having to use traditional TTL approaches. For example an alternative would be to use end-to-end approaches. For example, there can be a link between two network elements which are not on any regular network path from a home gateway, but which is on a network path between two end-points in the home network. If this link is of a much lower speed then the other links in the home network, using an end-to-end probe relayed through this link will discover this bottleneck between the two end-points, without using a per-hop probing method.

## Claims

1. A method of probing a network between a probe node (201) and a destination node (203), wherein the network comprises
- a further node (204), wherein the further node is an end point;
- a connection between the probe node (201) and the destination node (203);
- a connection between the probe node (201) and the further node (204);
- and a connection between the further node (204) and the destination node (203);
the method comprising:
- selecting the further node (204) to be a forwarding node and ensuring packet forwarding at the forwarding node;
- selecting the probe node (201) to be a redirecting node and changing the routing rules at the redirecting node by making the IP address of the further node a gateway for the destination IP address of the destination node so that packets going from the probe node to the destination node are routed to the forwarding node, or selecting the destination node (203) to be the redirecting node and changing the routing rules at the redirecting node by making the IP address of the further node a gateway for the destination IP address of the probe node so that packets going from the destination node to the probe node are routed to the forwarding node;
- transmitting a probe packet (205, 206, 207, 208) between the probe node (201) and the destination node (203) or vice versa, so that the probe packet (205, 206, 207, 208) travels between the probe node (201) and the destination node (203) via the forwarding node; and
- changing the routing rules at the redirecting node back after probing.

2. The method according to any of the previous claims wherein packet forwarding is IP forwarding.

3. The method according to claim 2 wherein the routing rules are changed at the redirecting node so that the IP address of the destination node (203) is used as the IP destination address of the probe packet (205, 206, 207, 208) and the MAC address of the forwarding node is used as the destination MAC address of the probe packet (205, 206, 207, 208).

4. The method of claim 1 where the network includes a residential gateway and the residential gateway is selected as the probe node (201).

5. A network comprising at least a probe node (201), a destination node (203) and a forwarding node (204), wherein the forwarding node is an end point with enabled packet forwarding, the forwarding node having a connection to the destination node, and the probe node comprising a connection to the forwarding node and to the destination node,
wherein, when the probe node is a redirecting node, the probe node is configured for changing routing rules by making the IP address of the forwarding node a gateway for the destination IP address of the destination node so that packets going from the probe node to the destination node are routed to the forwarding node, or wherein, when the destination node is the redirecting node, the destination node is configured for changing routing rules by making the IP address of the forwarding node a gateway for the destination IP address of the probe node so that packets going from the destination node to the probe node are routed to the forwarding node, and
wherein the network is arranged to transmit a probe packet (205, 206, 207, 208) between the probe node (201) and the destination node (203) or vice versa, so that the probe packet (205, 206, 207, 208) travels between the probe node (201) and the destination node (203) via the forwarding node; and wherein the redirecting node is configured to change the routing rules back after probing.

6. A network according to claim 5 wherein the probe node (201) is a gateway device and is arranged to couple the network to another network.

7. A redirecting node in a network, the network comprising a probe node (201), a destination node (203) and a forwarding node (204), wherein the forwarding node is an end point with enabled packet forwarding, the forwarding node having a connection to the destination node, and the probe node comprising a connection to the forwarding node and to the destination node,
wherein, when the redirecting node is the probe node, the redirecting node is configured for changing routing rules by making the IP address of the forwarding node a gateway for the destination IP address of the destination node so that packets going from the probe node to the destination node are routed to the forwarding node, or wherein, when the redirecting node is the destination node, the redirecting node is configured for changing routing rules by making the IP address of the forwarding node a gateway for the destination IP address of the probe node so that packets going from the destination node to the probe node are routed to the forwarding node and wherein the changed routing rules cause a probe packet transmitted between the probe node and the destination node or vice versa to travel via the forwarding node and
wherein the redirecting node is configured to change the routing rules back after probing.

8. The redirecting node according to claim 7, wherein the redirecting node is the probe node and is one of a residential gateway or home gateway.

## Patentansprüche

1. Verfahren zum Sondieren eines Netzes zwischen einem Sondenknoten (201) und einem Zielknoten (203), wobei das Netz Folgendes umfasst:
- einen weiteren Knoten (204), wobei der weitere Knoten ein Endpunkt ist;
- eine Verbindung zwischen dem Sondenknoten (201) und dem Zielknoten (203);
- eine Verbindung zwischen dem Sondenknoten (201) und dem weiteren Knoten (204);
- und eine Verbindung zwischen dem weiteren Knoten (204) und dem Zielknoten (203);
wobei das Verfahren Folgendes umfasst:
- Auswählen des weiteren Knotens (204) als weiterleitenden Knoten und Gewährleisten des Weiterleitens von Paketen an dem weiterleitenden Knoten;
- Auswählen des Sondenknotens (201) als umleitenden Knoten und Ändern der Routingregeln an dem umleitenden Knoten, indem die IP-Adresse des weiteren Knotens zu einem Gateway für die Ziel-IP-Adresse des Zielknotens gemacht wird, so dass Pakete, die von dem Sondenknoten zu dem Zielknoten gehen, zu dem weiterleitenden Knoten geroutet werden, oder Auswählen des Zielknotens (203) als den umleitenden Knoten und Ändern der Routingregeln an dem umleitenden Knoten, indem die IP-Adresse des weiteren Knotens zu einem Gateway für die Ziel-IP-Adresse des Sondenknotens gemacht wird, so dass Pakete, die von dem Zielknoten zu dem Sondenknoten gehen, zu dem weiterleitenden Knoten geroutet werden;
- Senden eines Sondenpakets (205, 206, 207, 208) zwischen dem Sondenknoten (201) und dem Zielknoten (203) oder umgekehrt, so dass das Sondenpaket (205, 206, 207, 208) zwischen dem Sondenknoten (201) und dem Zielknoten (203) über den weiterleitenden Knoten läuft; und
- Ändern der Routingregeln an dem umleitenden Knoten nach der Sondierung zurück.

2. Verfahren nach einem der vorhergehenden Ansprüche, wobei die Paketweiterleitung eine IP-Weiterleitung ist.

3. Verfahren nach Anspruch 2, wobei die Routingregeln bei dem umleitenden Knoten so geändert werden, dass die IP-Adresse des Zielknotens (203) als die IP-Zieladresse des Sondenpakets (205, 206, 207, 208) verwendet wird und die MAC-Adresse des weiterleitenden Knotens als die Ziel-MAC-Adresse des Sondenpakets (205, 206, 207, 208) verwendet wird.

4. Verfahren nach Anspruch 1, wobei das Netz einen "Residential Gateway" umfasst und das "Residential Gateway" als der Sondenknoten (201) gewählt wird.

5. Netz, das mindestens einen Sondenknoten (201), einen Zielknoten (203) und einen weiterleitenden Knoten (204) umfasst, wobei der weiterleitende Knoten ein Endpunkt mit freigeschalteter Paketweiterleitung ist, der weiterleitende Knoten eine Verbindung mit dem Zielknoten aufweist und der Sondenknoten eine Verbindung mit dem weiterleitenden Knoten und dem Zielknoten umfasst,
wobei dann, wenn der Sondenknoten ein umleitender Knoten ist, der Sondenknoten konfiguriert ist, Routingregeln zu ändern, indem die IP-Adresse des weiterleitenden Knotens zu einem Gateway für die Ziel-IP-Adresse des Zielknotens gemacht wird, so dass Pakete, die von dem Sondenknoten zu dem Zielknoten gehen, zu dem weiterleitenden Knoten geroutet werden, oder wobei dann, wenn der Zielknoten der umleitende Knoten ist, der Zielknoten konfiguriert ist, Routingregeln zu ändern, indem die IP-Adresse des weiterleitenden Knotens zu einem Gateway für die Ziel-IP-Adresse des Sondenknotens gemacht wird, so dass Pakete, die von dem Zielknoten zu dem Sondenknoten gehen, zu dem weiterleitenden Knoten geroutet werden, und
wobei das Netz dafür ausgelegt ist, ein Sondenpaket (205, 206, 207, 208) zwischen dem Sondenknoten (201) und dem Zielknoten (203) oder umgekehrt zu senden, so dass das Sondenpaket (205, 206, 207, 208) zwischen dem Sondenknoten (201) und dem Zielknoten (203) über den weiterleitenden Knoten läuft; und
wobei der umleitende Knoten konfiguriert ist, die Routingregeln nach der Sondierung zurück zu ändern.

6. Netz nach Anspruch 5, wobei der Sondenknoten (201) eine Gateway-Vorrichtung ist und dafür ausgelegt ist, das Netz an ein weiteres Netz zu koppeln.

7. Umleitender Knoten in einem Netz, wobei das Netz einen Sondenknoten (201), einen Zielknoten (203) und einen weiterleitenden Knoten (204) umfasst, wobei der weiterleitende Knoten ein Endpunkt mit freigeschalteter Paketweiterleitung ist, der weiterleitende Knoten eine Verbindung mit dem Zielknoten aufweist und der Sondenknoten eine Verbindung mit dem weiterleitenden Knoten und dem Zielknoten umfasst,
wobei dann, wenn der umleitende Knoten der Sondenknoten ist, der umleitende Knoten konfiguriert ist, Routingregeln zu ändern, indem die IP-Adresse des weiterleitenden Knotens zu einem Gateway für die Ziel-IP-Adresse des Zielknotens gemacht wird, so dass Pakete, die von dem Sondenknoten zu dem Zielknoten gehen, zu dem weiterleitenden Knoten geroutet werden, oder wobei dann, wenn der umleitende Knoten der Zielknoten ist, der umleitende Knoten konfiguriert ist, Routingregeln zu ändern, indem die IP-Adresse des weiterleitenden Knotens zu einem Gateway für die Ziel-IP-Adresse des Sondenknotens gemacht wird, so dass Pakete, die von dem Zielknoten zu dem Sondenknoten gehen, zu dem weiterleitenden Knoten geroutet werden, und wobei die geänderten Routingregeln bewirken, dass ein Sondenpaket, das zwischen dem Sondenknoten und dem Zielknoten oder umgekehrt gesendet wird, über den weiterleitenden Knoten läuft, und
wobei der umleitende Knoten konfiguriert ist, die Routingregeln nach der Sondierung zurück zu ändern.

8. Umleitender Knoten nach Anspruch 7, wobei der umleitende Knoten der Sondenknoten ist und ein "Residential Gateway" oder ein "Home Gateway" ist.

## Revendications

1. Procédé de sondage d'un réseau entre un nœud de sondage (201) et un nœud de destination (203), dans lequel le réseau comprend :
- un nœud supplémentaire (204), où le nœud supplémentaire est un point final ;
- une connexion entre le nœud de sondage (201) et le nœud de destination (203) ;
- une connexion entre le nœud de sondage (201) et le nœud supplémentaire (204) ;
- et une connexion entre le nœud supplémentaire (204) et le nœud de destination (203) ;
le procédé comprenant :
- la sélection du nœud supplémentaire (204) en tant que nœud de réacheminement et la garantie du réacheminement des paquets au niveau du nœud de réacheminement ;
- la sélection du nœud de sondage (201) en tant que nœud de redirection et le changement des règles de routage au niveau du nœud de redirection en faisant de l'adresse IP du nœud supplémentaire une passerelle pour l'adresse IP de destination du nœud de destination de manière à ce que les paquets allant du nœud de sondage au nœud de destination soient routés vers le nœud de réacheminement, ou la sélection du nœud de destination (203) en tant que nœud de redirection et le changement des règles de routage au niveau du nœud de redirection en faisant de l'adresse IP du nœud supplémentaire une passerelle pour l'adresse IP de destination du nœud de sondage de manière à ce que les paquets allant du nœud de destination au nœud de sondage soient routés vers le nœud de réacheminement ;
- la transmission d'un paquet de sondage (205, 206, 207, 208) entre le nœud de sondage (201) et le nœud de destination (203), ou vice versa, de manière à ce que le paquet de sondage (205, 206, 207, 208) se déplace entre le nœud de sondage (201) et le nœud de destination (203) par l'intermédiaire du nœud de réacheminement ; et
- le changement des règles de routage au niveau du nœud de redirection après le sondage.

2. Procédé selon l'une quelconque des revendications précédentes, dans lequel le réacheminement des paquets est un réacheminement IP.

3. Procédé selon la revendication 2, dans lequel les règles de routage sont modifiées au niveau du nœud de redirection de manière à ce que l'adresse IP du nœud de destination (203) soit utilisée comme adresse IP de destination du paquet de sondage (205, 206, 207, 208) et que l'adresse MAC du nœud de réacheminement soit utilisée comme adresse MAC de destination du paquet de sondage (205, 206, 207, 208).

4. Procédé selon la revendication 1, dans lequel le réseau inclut une passerelle résidentielle, et la passerelle résidentielle est sélectionnée en tant que nœud de sondage (201).

5. Réseau comprenant au moins un nœud de sondage (201), un nœud de destination (203) et un nœud de réacheminement (204), où le nœud de réacheminement est un point final avec réacheminement des paquets activé, le nœud de réacheminement ayant une connexion vers le nœud de destination (203), et le nœud de sondage comprenant une connexion vers le nœud de réacheminement et le nœud de destination,
où, lorsque le nœud sondage est un nœud de redirection, le nœud sondage est configuré pour changer les règles de routage en faisant de l'adresse IP du nœud de réacheminement une passerelle pour l'adresse IP de destination du nœud de destination de manière à ce que les paquets allant du nœud sondage au nœud de destination soient routés vers le nœud de réacheminement, ou dans lequel, lorsque le nœud de destination est le nœud de redirection, le nœud de destination est configuré pour changer les règles de routage en faisant de l'adresse IP du nœud de réacheminement une passerelle pour l'adresse IP de destination du nœud sondage de manière à ce que les paquets allant du nœud de destination au nœud de sondage soient routés vers le nœud de réacheminement, et
où le réseau est configuré pour transmettre un paquet de sondage (205, 206, 207, 208) entre le nœud de sondage (201) et le nœud de destination (203) ou vice versa, de manière à ce que le paquet de sondage (205, 206, 207, 208) se déplace entre le nœud de sondage (201) et le nœud de destination (203) par l'intermédiaire du nœud de réacheminement ; et
où le nœud de redirection est configuré pour changer les règles de routage après le sondage.

6. Réseau selon la revendication 5, dans lequel le nœud de sondage (201) est un dispositif de passerelle et est agencé pour coupler le réseau à un autre réseau.

7. Nœud de redirection dans un réseau, le réseau comprenant un nœud de sondage (201), un nœud de destination (203) et un nœud de réacheminement (204), où le nœud de réacheminement est un point final avec un réacheminement des paquets activé, le nœud de réacheminement ayant une connexion vers le nœud de destination, et le nœud de sondage comprenant une connexion vers le nœud d'envoi et vers le nœud de destination,
où, lorsque le nœud de redirection est le nœud de sondage, le nœud de redirection est configuré pour changer les règles de routage en faisant de l'adresse IP du nœud de réacheminement une passerelle pour l'adresse IP de destination du nœud de destination de manière à ce que les paquets allant du nœud de sondage au nœud de destination soient acheminés vers le nœud de réacheminement, ou dans lequel, lorsque le nœud de redirection est le nœud de destination, le nœud de réorientation est configuré pour changer les règles de routage en faisant de l'adresse IP du nœud de réacheminement une passerelle pour l'adresse IP de destination du nœud de sondage de manière à ce que les paquets allant du nœud de destination au nœud de sondage soient routés vers le nœud de réacheminement et où les règles de routage changées font qu'un paquet de sondage transmis entre le nœud de sondage et le nœud de destination, ou vice versa, voyage par l'intermédiaire du nœud de réacheminement, et
où le nœud de redirection est configuré pour changer dans l'autre sens les règles de routage après le sondage.

8. Nœud de redirection selon la revendication 7, dans lequel le nœud de redirection est le nœud de sondage et est une passerelle parmi une passerelle résidentielle ou une passerelle domestique.
